# FASCICULE DE BREVET EUROPEEN

(11) **EP 3 793 867 B1**
(45) Date de publication et mention de la délivrance du brevet: **30.11.2022**
(21) Numéro de dépôt: 19790032.7
(22) Date de dépôt: 17.04.2019
(51) Int. Cl.: B60R 13/02, B62D 65/14

(54) **GARNISSAGE DE PORTE DE VÉHICULE DOTE DE MOYENS DE SOUTENEMENT DE LA PARTIE INFÉRIEURE DU PANNEAU PRINCIPAL PORTEUR**
FAHRZEUGTÜRVERKLEIDUNG MIT MITTEL ZUM STÜTZEN DES UNTEREN TEILS DER HAUPTTRÄGERPLATTE
VEHICLE DOOR TRIM EQUIPPED WITH MEANS FOR SUPPORTING THE LOWER PART OF THE MAIN CARRIER PANEL

(30) Priorité: 18.05.2018 FR 1854182
(43) Date de publication de la demande: 24.03.2021
(73) Titulaire: PSA Automobiles SA, 78300 Poissy (FR)
(72) Inventeur: BREFORT, Laurent, 78280 Guyancourt (FR); MARQUES DOS SANTOS, Luis Miguel, 78140 Velizy Villacoublay (FR)
(86) Numéro de dépôt international: PCT/FR2019/050917
(87) Numéro de publication internationale: WO 2019/220027

(56) Documents cités:
- DE-A1-102015 202 420
- US-A- 5 111 619
- US-A1- 2013 112 336

## Description

### Domaine de l'invention

La présente invention concerne d'une manière générale les portes latérales de véhicules. Elle vise en particulier un garnissage pour une telle porte de véhicule.

### Arrière-plan de l'invention

Une porte latérale de véhicule automobile comprend traditionnellement une structure de porte latérale formée d'un châssis métallique et d'une doublure métallique interne, ainsi qu'un garnissage destiné à être fixé sur la doublure interne et comprenant divers accessoires tels qu'un accoudoir, un bac de rangement vide-poche, des moyens de commande du dispositif lève-vitre, etc.

Le châssis de porte comporte une partie supérieure formant un cadre délimitant une ouverture obturable par une vitre déplaçable, et une partie inférieure à laquelle la doublure interne de porte est fixée.

Cette partie inférieure du châssis et cette doublure interne forment un caisson destiné à recevoir des équipements électriques de la porte tels que par exemple un dispositif lève-vitre et une commande de fermeture centralisée.

Un garnissage de porte est ensuite rapporté sur la doublure interne de porte.

De manière générale, une tel garnissage de porte comporte un panneau principal porteur réalisé à partir d'un polymère thermoplastique et recouvrant la majeure partie de la surface de la doublure interne, ainsi qu'une pluralité d'éléments de garniture solidarisés à ce panneau porteur pour former au moins partiellement certains accessoires de la porte tels que notamment le bac de rangement vide-poche, l'accoudoir, le bandeau supérieur, ou encore des médaillons décoratifs.

Ces éléments de garniture sont formés par des panneaux réalisés à partir d'un polymère thermoplastique et recouverts éventuellement par une peau de revêtement en textile, en cuir ou en matière synthétique définissant une surface extérieure d'aspect.

Le panneau principal porteur comprend une façade destinée à s'étendre en regard de la doublure interne de porte et un bandeau périphérique bordant ladite façade en s'étendant sensiblement transversalement à cette dernière.

Tel que divulgué notamment dans la demande FR 2 977 836, ce bandeau périphérique, se terminant par un bord libre destiné à venir reposer en appui contre la périphérie de la doublure interne de porte, est généralement pourvu d'agrafes de fixation en matière plastique destinées à venir se clipper dans des orifices ménagés en périphérie de cette doublure interne de porte pour assurer la fixation par encliquetage du garnissage sur cette dernière.

Pour des raisons logistiques évidentes, les garnissages de porte sont généralement stockés à la verticale les uns contre les autres dans des entrepôts.

Durant cette phase de stockage pouvant perdurer durant plusieurs mois, la partie inférieure des bandeaux périphériques des panneaux porteurs de ces garnissages repose ainsi en porte en faux sur le sol de l'entrepôt ce qui, associé aux variations des conditions de température et d'humidité régnant à l'intérieur de cet entrepôt, peut entrainer sa déformation.

Une telle déformation a pour conséquence que les agrafes de fixation disposées dans la partie inférieure du bandeau périphérique du panneau porteur ne viennent plus en regard des orifices correspondants ménagés en périphérie de la doublure interne de porte, ce qui complique voire empêche le montage du garnissage sur cette doublure interne par un opérateur.

### Objet et résumé de l'invention

La présente invention vise donc à améliorer la situation.

Elle propose à cet effet, une garnissage de porte latérale de véhicule automobile conforme à l'objet de la revendication 1 ; l'enseignement du document DE 10 2015 202420 A1 étant contenu dans le préambule de la revendication 1.

Selon des caractéristiques préférées dudit garnissage, prises seules ou en combinaison :
- chaque au moins dite béquille comprend deux limons avant et arrière bordant de part et d'autre lesdites marches et contremarches et reposant en appui sur ledit toit dudit bossage ;
- chaque au moins dite béquille comprend une pluralité de nervures de rigidification principales s'étendant selon des plans verticaux transversaux entre ladite marche supérieure et la partie inférieure dudit élément de garniture en étant adossées audit rebord périphérique ;
- ledit garnissage comporte deux dites béquilles de soutènement espacées longitudinalement l'une de l'autre ;
- ledit élément de garniture est constitué par un fond de bac de rangement se présentant sous la forme d'une cuvette ; et/ou
- chaque au moins dite béquille est venue de moulage d'une seule pièce avec ledit fond de bac à partir d'un polymère thermoplastique.

L'invention vise également sous un second aspect, une porte latérale de véhicule automobile comportant une structure métallique de porte dotée d'une doublure interne et un tel garnissage de porte rapporté fixement contre ladite doublure interne.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en élévation de la face donnant sur l'habitacle d'un garnissage de porte latérale selon l'invention destiné à recouvrir la doublure interne de la structure de porte latérale de la figure 1 ;
- la figure 2 est une vue en élévation de la face opposée destinée à être rapportée sur une doublure interne de porte latérale du garnissage de la figure 1 ;
- la figure 3 représente un agrandissement du détail III de la figure 2 ;
- la figure 4 est une vue de section de la partie inférieure du garnissage de la figure 1 ; et
- la figure 5 représente une vue de coupe en perspective de la zone de fixation par bouterollage d'une béquille sur le panneau porteur du garnissage de la figure 1.

### Description détaillée d'un mode de réalisation

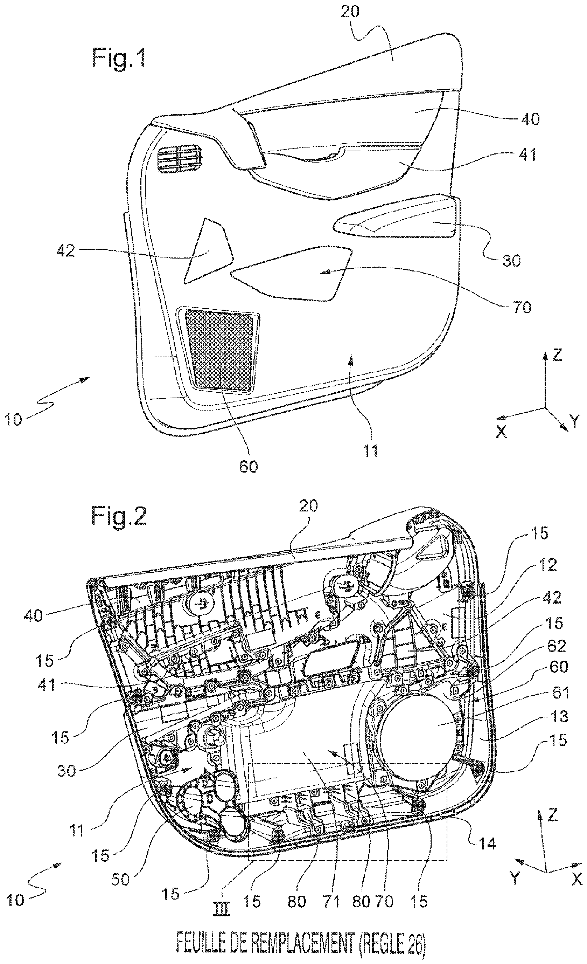

Les figures 1 et 2 représentent un garnissage de porte latérale 10 selon l'invention destiné à être rapporté sur la doublure interne d'une structure de porte latérale de véhicule non représentée.

On définit par rapport au véhicule un repère orthogonal direct XYZ comprenant trois axes perpendiculaires deux à deux, à savoir :
- un axe longitudinal horizontal X, parallèle au sol et confondu avec la direction générale de déplacement du véhicule ;
- un axe transversal horizontal Y, également parallèle au sol et perpendiculaire à l'axe X ; et
- un axe vertical Z, perpendiculaire au sol ainsi qu'au plan XY horizontal.

Dans la description qui va suivre et par convention, les termes « inférieur », « supérieur », « avant » et « arrière » seront définis par rapport à la position de montage du garnissage de porte selon l'invention dans un véhicule.

Par ailleurs, le terme « sensiblement » sera utilisé pour indiquer qu'un léger écart est admis par rapport à une position ou disposition nominale prédéterminée, tout en restant inclus dans le cadre de l'invention. Par exemple, « sensiblement perpendiculaire » indiquera qu'un écart de l'ordre de 15° par rapport à une orientation strictement perpendiculaire est admis dans le cadre de l'invention.

Le garnissage 10 comporte de manière classique un panneau principal porteur 11 venu de moulage d'une seule pièce à partir d'un polymère thermoplastique éventuellement renforcé de fibres naturelles et/ou synthétiques, et apte à recouvrir la majeure partie de la surface de cette doublure interne.

Ce panneau porteur 11 comprend une façade 12 destinée à s'étendre en regard de la doublure de porte, et un bandeau périphérique 13 bordant à l'avant, à l'arrière et en partie inférieure la façade 12 en s'étendant sensiblement transversalement à cette dernière.

Ce bandeau périphérique 13 se termine par un bord libre 14 destiné à venir reposer en appui contre la périphérie de la doublure interne de porte.

La face interne de ce bandeau périphérique 13 est pourvue d'agrafes de fixation 15 en matière plastique réparties régulièrement sur son pourtour et destinées à venir se clipper dans des orifices ménagés en périphérie de la doublure interne de porte pour assurer la fixation du garnissage sur cette doublure interne.

Le garnissage 10 comprend également une pluralité d'éléments de garniture solidarisés à la façade de ce panneau porteur 11 pour former au moins partiellement certains accessoires de la porte latérale.

Ces éléments de garniture sont en l'espèce constitués par un bandeau supérieur 20, un accoudoir 30, trois médaillons décoratifs 40, 41, 42, un corps amortisseur de chocs 50 destiné à absorber l'énergie en cas de choc latéral, une grille de haut-parleur 60, et un fond de bac 70.

Le bandeau supérieur 20 est constitué classiquement par un bloc de mousse recouvert d'une peau de revêtement en textile (tissé ou non), en cuir ou en matière synthétique et définissant une surface extérieure d'aspect. Il est par exemple appliqué sur le panneau porteur 11 par thermo-gainage de manière bien connue de l'homme du métier.

Le bloc de mousse et la peau de revêtement sont associés par l'une des différentes techniques bien connues de l'homme du métier telles que le flammage ou le collage par chauffage d'une colle préalablement interposée entre les deux.

L'accoudoir 30 et les enjoliveurs médaillons décoratifs 41, 42, 43 sont ici constitués par des panneaux venus de moulage à partir d'un polymère thermoplastique et recouverts d'une peau de revêtement en textile (tissé ou non), en cuir ou en matière synthétique et définissant une surface extérieure d'aspect.

Le corps amortisseur de choc 50 est venu de moulage d'une seule pièce à partir d'un polymère thermoplastique.

La grille de haut parleur 60 comprend un grillage métallique 61 entouré d'un cadre 62 constitué par un panneau venu de moulage à partir d'un polymère thermoplastique.

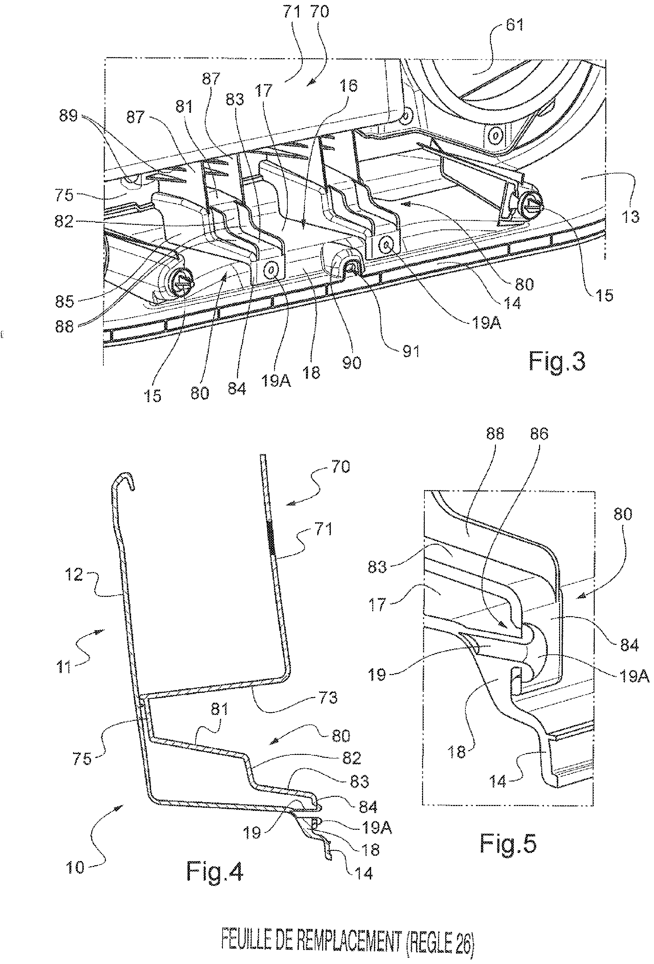

Rapporté contre une partie centrale inférieure du panneau porteur 11 munie d'une découpe d'accès 11A, le fond de bac 70 se présente sous la forme d'une cuvette globalement rectangulaire, orientée verticalement et venue de moulage à partir d'un polymère thermoplastique, cette cuvette étant délimitée par une paroi de fond 71 s'étendant selon un plan sensiblement parallèle à la façade 12 du panneau principal porteur 11, deux parois verticales avant (non visible) et arrière 72 et une paroi inférieure sensiblement horizontale 73 (voir figure 4).

La fixation de l'accoudoir 30, des trois médaillons décoratifs 40, 41, 42, du corps amortisseur de choc 50, de la grille de haut-parleur 60, ainsi que celle du fond de bac 70 sur le panneau porteur 11 est assurée de manière bien connue de l'homme du métier par bouterollage (ou rivetage à chaud).

Selon l'invention et tel que cela est mieux visible sur la figure 3, le garnissage 10 comporte également deux béquilles de soutènement 80 en forme d'escalier venues de moulage d'une seule pièce avec le fond de bac 70 et espacées longitudinalement l'une de l'autre.

Ces béquilles 80 s'étendent vers le bas depuis la paroi inférieure du fond de bac 70 et reposent sur le toit plan horizontal 17 d'un bossage 16 saillant en relief de la face interne de la partie inférieure du bandeau périphérique 13 du panneau porteur 11, ce bossage 16 s'étendant transversalement en direction du bord libre 14 de ce bandeau périphérique 13 jusqu'à un décrochement 18 sensiblement vertical.

Chaque béquille 80 comprend successivement une marche supérieure 81 sensiblement horizontale, une contremarche supérieure 82 sensiblement verticale, une marche inférieure 83 sensiblement horizontale, une contremarche inférieure 84 sensiblement verticale, ainsi que deux limons avant (non visible sur les figures) et arrière 85 les bordant de part et d'autre et reposant en appui sur le toit 17 du bossage 16.

Tel que cela est bien visible sur la figure 4, la marche supérieure 81 est raccordée transversalement à un rebord périphérique 75 bordant le fond de bac 70 et dans lequel sont ménagées une pluralité d'orifices circulaires non représentés permettant sa fixation par bouterollage sur le panneau porteur 11.

La contremarche inférieure 84 qui repose contre le décrochement 18 est fixée à ce dernier par bouterollage.

Pour ce faire et tel qu'illustré sur la figure 5, cette contremarche 84 présente un orifice circulaire 86 traversé par un pion cylindrique creux 19 s'étendant transversalement depuis le décrochement 18.

La solidarisation de ces deux pièces est obtenue en exerçant, à l'aide d'une bouterolle, une pression d'appui sur l'extrémité libre de ce pion cylindrique 19 pendant que ce dernier est soumis à des vibrations ultrasonores.

L'énergie produite par les ultrasons provoque un échauffement intense de la matière, laquelle fusionne à l'interface d'assemblage.

L'extrémité libre de ce pion cylindrique 19 est alors écrasée de sorte à former une tête de rivet 19A empêchant tout retrait ultérieur de la béquille 80.

Chaque béquille 80 comporte également :
- deux nervures de rigidification principales 87 s'étendant selon des plans verticaux transversaux entre la marche supérieure et la paroi inférieure du fond de bac en étant adossées au rebord du fond de bac ;
- deux nervures de rigidification secondaires 88 en équerre s'étendant selon des plans verticaux transversaux depuis la marche inférieure 83 et étant adossées à la contremarche supérieure 82 ; et
- deux nervures de rigidification tertiaires 89 en équerre s'étendant selon des plans horizontaux depuis chaque nervure de rigidification principale 87 en étant adossées au rebord périphérique 75 du fond de bac 70.

Comme illustré sur la figure 3, le garnissage 10 comporte en outre un dôme 90 saillant de la face interne du bandeau périphérique 13 au niveau de son bord libre 14 et étant adossé au décrochement 18 entre les deux béquilles 80.

La façade sensiblement verticale de ce dôme 90 présente un orifice circulaire 91 pour une vis d'assemblage destinée à venir se visser dans la partie inférieure de la périphérie de la doublure de porte afin d'assurer une meilleure tenue du garnissage 10 en évitant le déclippage des agrafes de fixation 15 en cas de choc latéral.

Selon des variantes de réalisation non représentées, les béquilles sont conformées autrement et/ou leur nombre est différent (compris par exemple entre 1 et 4).

Selon d'autres variantes de réalisation non représentée, les béquilles sont solidarisées au panneau principal porteur par d'autres moyens de fixation (par exemple, par collage ou vissage).

Selon encore d'autres variantes de réalisation non représentées, les béquilles sont associées à un élément de garniture autre que le fond de bac.

On rappelle enfin que la présente invention ne se limite pas aux formes de réalisation décrites et représentées, mais elle englobe toute variante d'exécution à la portée de l'homme du métier.

## Revendications

1. Garnissage de porte latérale de véhicule automobile comportant un panneau principal porteur (11) comprenant une façade (12) destinée à s'étendre en regard de la doublure interne d'une structure métallique de porte latérale et un bandeau périphérique (13) bordant ladite façade (12) en s'étendant sensiblement transversalement à cette dernière, ledit bandeau (13) se terminant par un bord libre (14) destiné à venir reposer en appui contre la périphérie de ladite doublure interne de porte, ledit garnissage comportant également des éléments de garniture (20, 30, 40, 41, 42, 50, 60, 70) solidarisés audit panneau principal porteur (11) pour former au moins partiellement certains accessoires de ladite porte latérale, ledit garnissage de porte latérale comportant au moins une béquille de soutènement (80) liée rigidement à un dit élément de garniture (70) et s'étendant vers le bas en reposant en appui contre la face interne de la partie inférieure dudit bandeau périphérique (13), chaque au moins dite béquille (80) reposant sur le toit plan (17) d'un bossage (16) saillant en relief de la face interne de la partie inférieure dudit bandeau périphérique (13), ledit bossage (16) s'étendant transversalement en direction dudit bord libre (14) du bandeau périphérique (13) jusqu'à un décrochement (18), chaque au moins dite béquille (80) est fixée audit décrochement (18) dudit bossage (16), **caractérisé en ce que** chaque au moins dite béquille (80), en forme d'escalier, comprend successivement une marche supérieure (81) raccordée transversalement à un rebord périphérique (75) bordant ledit élément de garniture (70) et destiné à permettre sa fixation à la façade (12) dudit élément principal porteur (11), une contremarche supérieure (82), une marche inférieure (83) et une contremarche inférieure (84) fixée par bouterollage audit décrochement (18) dudit bossage (16).

2. Garnissage de porte latérale selon la revendication 1, **caractérisé en ce que** chaque au moins dite béquille (80) comprend deux limons avant et arrière (85) bordant de part et d'autre lesdites marches (81, 83) et contremarches (82, 84) et reposant en appui sur ledit toit (17) dudit bossage (16).

3. Garnissage de porte latérale selon l'une des revendications 1 ou 2, **caractérisé en ce que** chaque au moins dite béquille (80) comprend une pluralité de nervures de rigidification principales (87) s'étendant selon des plans verticaux transversaux entre ladite marche supérieure (81) et la partie inférieure dudit élément de garniture (70) en étant adossées audit rebord périphérique (75) ;

4. Garnissage de porte latérale selon l'une des revendications 1 à 3, **caractérisé en ce qu'**il comporte deux dites béquilles de soutènement (80) espacées longitudinalement l'une de l'autre.

5. Garnissage de porte latérale selon l'une des revendications 1 à 4, caractérisé en ce ledit élément de garniture est constitué par un fond de bac de rangement (70) se présentant sous la forme d'une cuvette orientée verticalement.

6. Garnissage de porte latérale selon la revendication 5, **caractérisé en ce que** chaque au moins dite béquille (80) est venue de moulage d'une seule pièce avec ledit fond de bac (70) à partir d'un polymère thermoplastique.

7. Porte latérale de véhicule automobile comportant une structure métallique de porte dotée d'une doublure interne, et un garnissage de porte conforme à l'une des revendications 1 à 6 rapporté fixement contre ladite doublure interne.

## Patentansprüche

1. Seitentürverkleidung für ein Kraftfahrzeug mit einer Hauptträgerplatte (11), die eine Vorderseite (12), die sich gegenüber der Innenverkleidung einer metallischen Seitentürstruktur erstreckt, und einen Umfangsstreifen (13), der die Vorderseite (12) im Wesentlichen quer zu ihr umgibt, umfasst, wobei der Streifen (13) in einem freien Rand (14) endet, der dazu bestimmt ist, gegen den Umfang der Innenverkleidung anzuliegen, wobei die Verkleidung auch Verkleidungselemente (20, 30, 40, 41, 42, 50, 60, 70) fest mit der Haupttragplatte (11) verbunden sind, um zumindest teilweise Zubehörteile der Seitentür zu bilden, wobei die Seitentürauskleidung zumindest einen Stützbein (80) aufweist, der starr mit einem Auskleidungselement (70) verbunden ist und sich nach unten erstreckt, wobei er an der Innenseite des unteren Teils des Umfangsbandes (13) anliegt, wobei jeder Stützbein (80) auf dem ebenen Dach (17) eines Vorsprungs (16) aufliegt, der von der Innenseite des unteren Teils des Bandes hervorsteht (13), wobei sich der Vorsprung (16) quer in Richtung des freien Randes (14) des Umfangsbandes (13) bis zu einem Absatz (18) erstreckt, jeder der mindestens einen Ständer (80) an dem Absatz (18) des Vorsprungs (16) befestigt ist, **dadurch gekennzeichnet, dass** jeder der mindestens einen Ständer (80) in Form einer Treppe nacheinander eine obere Stufe (81) umfasst, die quer mit einem Umfangsrand (75) verbunden ist, der das Verkleidungselement (70) umgibt und dazu bestimmt ist, seine Befestigung zu ermöglichen an der Fassade (12) des Hauptträgerelements (11) eine obere Stufe (82), eine untere Stufe (83) und eine untere Stufe (84), die an dem Absatz (18) des Vorsprungs (16) durch Aufkleben befestigt ist.

2. Seitentürverkleidung nach Anspruch 1, **dadurch gekennzeichnet, dass** jeder der wenigstens einen Ständer (80) zwei vordere und hintere Schenkel (85) umfasst, die beiderseits der Stufen (81, 84) angrenzen und auf dem Dach (17) des Vorsprungs (16) aufliegen.

3. Seitentürverkleidung nach einem der Ansprüche 1 oder 2, **dadurch gekennzeichnet, dass** jeder der wenigstens einen Ständer (80) eine Vielzahl von Hauptversteifungsrippen (87) aufweist, die sich in vertikalen Querebenen zwischen der oberen Stufe (81) und dem unteren Teil des Verkleidungselements (70) erstrecken, wobei sie an dem Umfangsrand (75) anliegen.

4. Seitentürauskleidung nach einem der Ansprüche 1 bis 3, **dadurch gekennzeichnet, dass** sie zwei in Längsrichtung voneinander beabstandete Stützbeine (80) aufweist.

5. Seitentürverkleidung nach einem der Ansprüche 1 bis 4, **dadurch gekennzeichnet, dass** das Verkleidungselement aus einem Behälterboden (70) in Form einer vertikal ausgerichteten Wanne besteht.

6. Seitentürverkleidung nach Anspruch 5, **dadurch gekennzeichnet, dass** jeder der wenigstens einen Ständer (80) einstückig mit dem Wannenboden (70) aus einem thermoplastischen Polymer geformt ist.

7. Seitentür für ein Kraftfahrzeug mit einer metallischen Türstruktur mit einer Innenauskleidung und einer Türauskleidung nach einem der Ansprüche 1 bis 6, die fest an der Innenauskleidung angebracht ist.

## Claims

1. A side door lining for a motor vehicle comprising a main carrier panel (11) comprising a facade (12) for extending facing the inner lining of a metal side door structure and a peripheral strip (13) bordering said facade (12) and extending substantially transversely thereto, said strip (13) terminating in a free edge (14) for resting against the periphery of said inner door lining, said lining also comprising lining elements (20, 30, 40, 41, 42, 50) 60, 70) secured to said main support panel (11) to form at least partially certain accessories of said side door, said side door lining comprising at least one support stand (80) rigidly connected to said lining element (70) and extending downwards while resting against the inner face of the lower part of said peripheral strip (13), each at least said stand (80) resting on the flat roof (17) of a boss (16) projecting in relief from the inner face of the lower part of said peripheral strip (13) ), said boss (16) extending transversely in the direction of said free edge (14) of the peripheral band (13) up to a step (18), each at least said stand (80) is fixed to said step (18) of said boss (16), **characterized in that** each at least said stand (80), in the form of a staircase, comprises in succession an upper step (81) connected transversely to a peripheral edge (75) bordering said lining element (70) and intended to allow it to be fixed to the facade (12) of said main supporting element (11), an upper riser (82), a lower step (83) and a lower riser (84) fixed by snap-fastening to said step (18) of said boss (16).

2. A side door fitting according to claim 1, **characterized in that** each at least said stand (80) comprises two front and rear strands (85) bordering on each side said steps (81, 84) and resting against said roof (17) of said boss (16).

3. A side door fitting according to one of claims 1 or 2, **characterized in that** each at least said stand (80) comprises a plurality of main stiffening ribs (87) extending in vertical transverse planes between said upper step (81) and the lower part of said fitting member (70), being backed against said peripheral rim (75).

4. Side door fitting according to one of Claims 1 to 3, **characterized in that** it comprises two said support legs (80) spaced longitudinally from one another.

5. Side door packing according to one of claims 1 to 4, **characterized in that** said packing element consists of a storage tray bottom (70) in the form of a vertically oriented bowl.

6. A side door fitting according to claim 5, **characterized in that** each at least said prop (80) is integrally molded with said tray bottom (70) from a thermoplastic polymer.

7. Side door of a motor vehicle comprising a metal door structure provided with an internal lining, and a door lining according to one of Claims 1 to 6 fixed against said internal lining.
